(19) Europäisches Patentamt
European Patent Office
Office européen des brevets

(11) **EP 4 339 728 B1**

(12) **EUROPEAN PATENT SPECIFICATION**

(45) Date of publication and mention
of the grant of the patent:
**12.02.2025 Bulletin 2025/07**

(21) Application number: **23197966.7**

(22) Date of filing: **18.09.2023**

(51) International Patent Classification (IPC):
***G05D 1/00*** (2024.01)

(52) Cooperative Patent Classification (CPC):
**G05D 1/0891; B62D 57/024; B62D 57/04;
G05D 1/027;** B64U 2101/25; B64U 2201/10

(54) **THRUST CONTROL METHOD FOR WALL-CLIMBING ROBOT**

SCHUBSTEUERUNGSVERFAHREN FÜR EINEN WANDKLETTERROBOTER

PROCÉDÉ DE COMMANDE DE POUSSÉE POUR ROBOT D'ESCALADE DE PAROI

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **19.09.2022 CN 202211136590**

(43) Date of publication of application:
**20.03.2024 Bulletin 2024/12**

(73) Proprietors:
• **China Railway Design Corporation (CRDC)**
**Tianjin (CN)**
• **TSDI (Tianjin) Testing Technology Co., Ltd**
**Tianjin (CN)**

(72) Inventors:
• **CUI, QingGuo**
**Tianjin (CN)**
• **HOU, ZhanLin**
**Tianjin (CN)**
• **ZHANG, Ji**
**Tianjin (CN)**
• **LIU, ZhanFeng**
**Tianjin (CN)**
• **LIU, ShiQi**
**Tianjin (CN)**
• **QI, XiaoYu**
**Tianjin (CN)**
• **WANG, JinYan**
**Tianjin (CN)**

(74) Representative: **Michalski Hüttermann & Partner
Patentanwälte mbB
Kaistraße 16A
40221 Düsseldorf (DE)**

(56) References cited:
EP-B1- 2 734 343        CN-A- 114 801 615
CN-A- 115 027 191       CN-U- 207 207 653

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

## TECHNICAL FIELD

Embodiments of the present invention relate to, but are not limited to, the field of robots, and in particular relate to a thrust control method for a wall-climbing robot.

## BACKGROUND

With the progress of technology, more and more robots are used to replace manual operation in the field of aerial work. Existing robots are mostly used in the field of lightweight aerial work, such as unmanned aerial vehicles for photography and window cleaning robots adsorbed on smooth surfaces for window cleaning in the consumer field, and ship maintenance robots with magnetic adsorption in the industrial field. However, in the field of engineering tunnels, since the wall is applied with rough concrete or even shotcrete, the robot with the existing technical solutions of negative pressure adsorption, magnetic adsorption and the like cannot normally work on rough tunnel wall. In the tunnel measurement operation, it is necessary for the robot to carry heavy measurement equipment to advance in the tunnel to measure, and meanwhile, it is necessary to measure at the same height of the side wall of the arched tunnel. The robot with an existing propeller flying solution cannot carry a large load. Meanwhile, due to the special curved space environment of the tunnel, the shape and movement mode of the robot are also limited, and the propeller cannot fly safely and measure effectively. Further, in the tunnel, the robot has a large dead weight and needs to carry heavy measuring equipment, and the robot using the technical solution of negative pressure in the related art is adsorbed on the wall of the tunnel. A machine is fixed on the wall under negative pressure by controlling a booster fan fixed on the machine, but if the heavy robot can be stabilized on a curved surface of the tunnel, even on a wall at a negative angle, the booster fan needs a large thrust, so that the friction force generated between the robot and the wall is enough to offset the gravity and stabilize the robot on the wall. Such a large thrust has extremely high requirements on the voltage and current of a power supply and it is difficult to achieve in actual engineering practice whether the robot is wired to the power supply or the robot carries a battery, with high cost and large difficulty.

Meanwhile, the contact surface between the robot and the wall will be seriously worn. Therefore, in the related art of thrust control of the robot, see for instance CN114801615A, it is difficult to keep the robot stably on the arched wall only by controlling the negative pressure between the robot and the wall.

## SUMMARY

The following is a summary of the subject matter described in detail herein. This summary is not intended to limit the scope of the claims.

An embodiment of the present invention provides a thrust control method for a wall-climbing robot. By controlling the direction and the thrust of a rotating duct, the thrust of the rotating duct is kept opposite to the gravity of a robot body in direction and equal to the gravity of the robot body in magnitude in real time, so that the robot can be stably suspended at any position of an arched wall.

An embodiment of the present invention provides a thrust control method for a wall-climbing robot. The wall-climbing robot includes a body, a plurality of rotating ducts configured to provide a thrust, a first pressure sensor configured to acquire thrust data corresponding to the rotating ducts. The method includes: acquiring an attitude direction of the body, and calculating a first included angle between the attitude direction and a direction of gravity of the body; adjusting a thrust direction of the rotating ducts according to the first included angle to make the thrust direction of the rotating ducts opposite to a direction of gravity; acquiring the thrust data corresponding to the rotating ducts, and adjusting the rotating speeds of fans in the rotating ducts according to the thrust data to make the thrust data equal to a value of gravity of the body.

According to the above embodiments of the present application, the present application has at least following beneficial effects. An attitude direction of the body is acquired first, and a first included angle between the attitude direction of the body and the direction of gravity is calculated; the rotating ducts are rotated according to the value of the first included angle, and the thrust direction of the rotating ducts is adjusted to make the thrust direction opposite to the direction of gravity of the body; the thrust data measured by the first pressure sensor is acquired, the rotating speeds of the fans in the rotating ducts are adjusted according to the thrust data to make the thrust data equal to the value of gravity of the body. By controlling the direction and the thrust of the rotating ducts, the thrust of the rotating ducts is kept opposite to the gravity of the robot body in direction, and equal to the gravity in magnitude in real time, so that the robot can be stably suspended at any position of the arched wall.

According to some embodiments of the present invention, the adjusting a thrust direction of the rotating ducts according to the first included angle includes: acquiring a rotational angular velocity corresponding to the attitude direction; acquiring a rotation direction of the body according to the rotational angular velocity; and rotating the rotating ducts in a direction opposite to the rotation direction of the body according to the first included angle and the rotation direction of the body, where the rotating ducts are rotated by the first included angle.

According to some embodiments of the present invention, the wall-climbing robot further includes an acceleration sensor configured to acquire an acceleration of the body. The method includes: acquiring a direction of the acceleration of the body, and calculating a second included angle between the acceleration of the body in a vertical direction and the direction of gravity of the body; and adjusting the rotating speeds of the fans in the rotating ducts according to the second included angle to make a value of the acceleration of the body in the vertical direction be zero.

According to some embodiments of the present invention, the adjusting rotating speeds of the fans in the rotating ducts according to the second included angle to make a value of the acceleration of the body in the vertical direction be zero includes: in a case that the second included angle is 0 degree, increasing the rotating speeds of the fans in the rotating ducts to make the value of the acceleration of the body in the vertical direction be zero; and in the case that the second included angle is 180 degrees, decreasing the rotating speeds of the fans in the rotating ducts to make the value of the acceleration in the vertical direction be zero.

According to some embodiments of the present invention, the wall-climbing robot further includes at least one fixed duct configured to provide a pressure on the wall and a second pressure sensor configured to acquire pressure data corresponding to the fixed duct. The adjusting rotating speeds of the fans in the rotating ducts according to the second included angle includes: acquiring the pressure data corresponding to the fixed duct; in the case that the second included angle is 0 degree, increasing a rotating speed of a fan in the fixed duct to make the value of the acceleration in the vertical direction be zero; and in the case that the second included angle is 180 degrees, stopping the rotation of the fan in the fixed duct.

According to some embodiments of the present invention, the acquiring the thrust data corresponding to the rotating ducts, and adjusting rotating speeds of fans in the rotating ducts according to the thrust data to make the thrust data equal to a value of gravity of the body includes: acquiring a plurality of the thrust data corresponding to the plurality of first pressure sensors; performing vector calculation on the plurality of thrust data to obtain a value and a direction of a thrust resultant force of the plurality of thrust data; and adjusting the rotating speeds of the fans in the plurality of the rotating ducts according to the value and the direction of the thrust resultant force.

According to some embodiments of the present invention, the adjusting the rotating speeds of the fans in the plurality of the rotating ducts according to the value and the direction of the thrust resultant force includes: acquiring preset installation moment arms corresponding to the plurality of rotating ducts; according to a lever balance, calculating a target thrust corresponding to the plurality of rotating ducts by using the installation moment arms; and adjusting the rotating speeds of the fans in the rotating ducts according to the target thrust corresponding to the rotating ducts and the thrust data to enable the thrust data to reach the calculated target thrust.

According to some embodiments of the present invention, the adjusting the rotating speeds of the fans in the rotating ducts according to the target thrust corresponding to the rotating ducts and the thrust data to enable the thrust data to reach the calculated target thrust includes: calculating a horizontal included angle between the attitude direction of the body and a horizontal direction; and adjusting the rotating speeds of the fans in the rotating ducts according to the horizontal included angle to make the plurality of rotating ducts on the same horizontal line.

According to some embodiments of the present invention, a PID control algorithm is adopted to control the thrust data.

According to some embodiments of the present invention, a PD control algorithm is adopted to control the thrust direction of the rotating duct.

Additional features and advantages of the present invention will be set forth in the following description, and in part will be apparent from the description, or may be learned by practice of the present invention. The objects and other advantages of the present invention may be realized and attained by the structures particularly pointed out in the description and claims as well as the accompany drawings.

## BRIEF DESCRIPTION OF DRAWINGS

The accompanying drawings are used to provide a further understanding of the technical solution of the present invention, constitute a part of the description, are used together with the embodiments of the present invention to explain the technical solution of the present invention, and do not constitute a limitation to the technical solution of the present invention.

FIG. 1 is a main flowchart of a thrust control method for a wall-climbing robot provided in an embodiment of the present invention; and

FIG. 2 is a schematic diagram of a wall-climbing robot provided in an embodiment of the present invention.

## DETAILED DESCRIPTION

In order to make the objects, technical solutions and advantages of the present invention clearer, the present invention will be further described in detail below in conjunction with the accompanying drawings and embodiments. It should be understood that the specific embodiments described here are only used to explain the present invention, rather than limiting the present invention.

It should be understood that in the description of the embodiments of the present invention, "a plurality of" means two or more, "greater than a number", "less than a number", "exceed a number" and the like indicate that the number is excluded, and "above a number", "below a number", "within a number", and the like indicate that the number is included. "First" and "second" if described are only used to distinguish between technical features, but cannot be used to indicate or imply relative importance or implicitly specify a quantity of indicated technical features or implicitly specify a sequential relationship of indicated technical features..

In the related art of tunnel measurement, it is difficult to keep a robot stably on an arched wall only by controlling a negative pressure between the robot and the wall. Therefore, in view of the existing problems, the embodiment of the present invention provides a thrust control method for a wall-climbing robot. By controlling the direction and the thrust of a rotating duct 200, the thrust of the rotating duct 200 is kept opposite to the gravity of a robot body 100 in direction and equal to the gravity of the robot body 100 in magnitude in real time, so that the robot can be stably suspended in the wall. The thrust control method for a wall-climbing robot provided in the embodiment of the present invention is applied to the wall-climbing robot. The wall-climbing robot includes a body 100, a plurality of rotating ducts 200 configured to provide a thrust, and a first pressure sensor configured to acquire thrust data corresponding to the rotating ducts 200. The thrust control method includes: acquiring an attitude direction of the body 100 first, where the attitude direction includes an angle of the body 100 on a vertical plane, and calculating a first included angle between the attitude direction and a direction of gravity of the body 100; rotating the rotating duct 200 according to a value of the first included angle, adjusting a thrust direction of the rotating duct 200 to make the thrust direction opposite to the direction of gravity of the body 100; acquiring the thrust data measured by the first pressure sensor, adjusting the rotating speed of the fan in the rotating duct 200 according to the thrust data to make the thrust data equal to the value of gravity of the body 100, and controlling the direction and the thrust of the rotating duct 200 to keep the thrust of the rotating duct 200 opposite to the gravity of the robot body 100 in direction and equal to the gravity of the robot body 100 in magnitude in real time, so that the robot can be stably suspended on the wall.

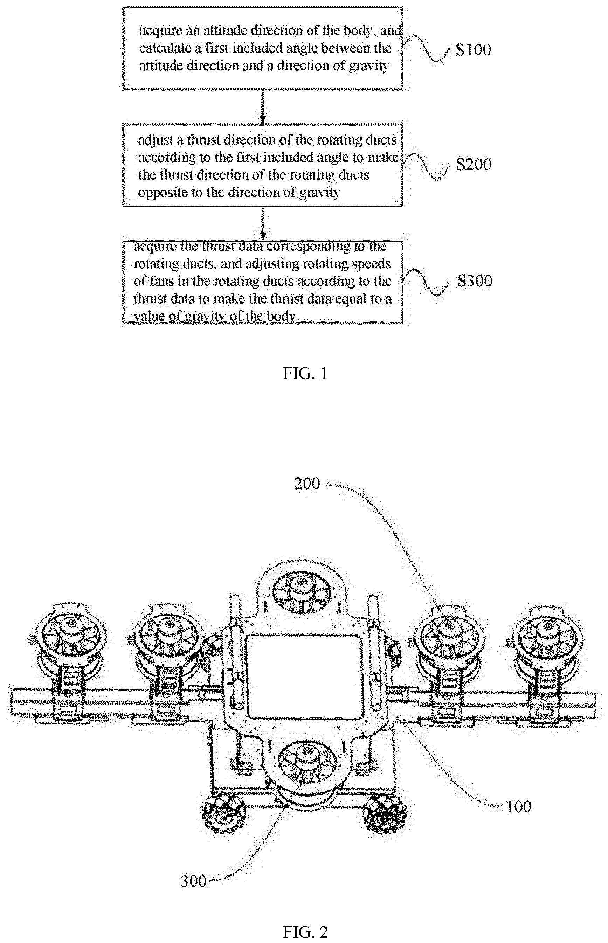

As shown in FIG. 1, FIG. 1 is a flowchart of a thrust control method for a wall-climbing robot provided in an embodiment of the present invention. The thrust control method for a wall-climbing robot includes, but is not limited to, the following steps:

Step S100, acquiring an attitude direction of a body 100, and calculating a first included angle between the attitude direction and a direction of gravity of the body 100;

Step S200, adjusting a thrust direction of a rotating duct 200 according to the first included angle to make the thrust direction opposite to the direction of gravity of the body 100; and

Step S300, acquiring thrust data, and adjusting a rotating speed of a fan in the rotating duct 200 according to the thrust data to make the thrust data equal to a value of gravity of the body 100.

It can be understood that, as shown in FIG. 2, FIG.2 is a schematic diagram of a wall-climbing robot provided in the embodiment. The thrust control method includes: acquiring an attitude direction of a body 100 first, where the attitude direction includes an angle of the body 100 on a vertical plane, and calculating a first included angle between the attitude direction and a direction of gravity of the body 100; rotating a rotating duct 200 according to a value of the first included angle, adjusting a thrust direction of the rotating duct 200 to make the thrust direction opposite to the direction of gravity of the body 100; acquiring thrust data measured by the first pressure sensor, adjusting a rotating speed of a fan in the rotating duct 200 according to the thrust data to make the thrust data equal to a value of gravity of the body 100, and controlling the direction and thrust of the rotating duct 200 to keep the thrust of the rotating duct 200 opposite to the gravity of the robot body 100 in direction and equal to the gravity of the robot body 100 in magnitude in real time, so that the robot can be stably suspended on the wall. Specifically, the rotating duct 200 is fixed on the robot body 100. In the embodiment, the rotating duct 200 rotates around an axis, that is, the rotating duct 200 is fixed on the body 100. In the embodiment, a load-bearing frame is arranged on the body 100, the load-bearing frame is of a linear type, the rotating duct 200 is fixed on the linear load-bearing frame, and there are a plurality of rotating ducts 200. In the embodiment, there are four rotating ducts 200 which are symmetrically arranged on both sides of the center of gravity of the robot body 100, that is, two rotating ducts 200 are arranged on the left side, and two rotating ducts 200 are arranged on the right side. The rotation direction of the rotating ducts 200 is perpendicular to the axis of the load-bearing frame. The axis of the load-bearing frame is parallel to a direction in which the robot advances in the horizontal direction. When the robot is on the wall, the axis of the load-bearing frame is in the horizontal direction. First, the attitude direction of the robot body 100 is acquired. The attitude direction is acquired by comparing the current attitude direction of the body 100 with the reference initial attitude direction. The initial attitude direction is an attitude direction of the robot, which is measured by a gyroscope installed in the body 100 when the robot is placed on a level ground. After the attitude direction is set, when the robot is at different positions on the curved surface of a tunnel, the change of the attitude direction of the robot on the curved surface may be calculated according to the initial attitude direction. The first included angle between the attitude direction and the direction of gravity of the body 100 can be calculated according to the included angle between the initial attitude direction and the direction of gravity. It can be understood that the pitch angle of the robot is detected by the gyroscope, the first included angle between the attitude direction and the direction of gravity of the body 100 is calculated according to the pitch angle. Since the rotating duct 200 is also fixed on the robot body 100, the rotating duct 200 has the same change according to the change of the attitude direction of the robot body 100. Therefore, according to the attitude direction of the body 100, it can be understood that the rotating duct 200 is rotated by the same angle in the direction opposite to the direction in which the attitude of the body 100 changes, so that the wind outlet direction of the rotating duct 200 is the same as the direction of gravity, that is, the thrust direction of the rotating duct 200 is opposite to the direction of gravity. In the embodiment, the first pressure sensor is arranged at a position where the robot body 100 is connected to the rotating duct 200, and may detect a pressure between the rotating duct 200 and the body 100 in real time. Therefore, according to the thrust data monitored by the first pressure sensor, the real-time thrust of the rotating duct 200 can be known, the gravity of the robot may be a preset value, or a real-time measured value. The thrust of the rotating duct 200 is adjusted, so that the thrust is opposite to the gravity in direction, and equal to the gravity in magnitude.

It can be understood that, in yet another embodiment, the wall-climbing robot further includes an acceleration sensor configured to acquire an acceleration of the body 100, a direction of the acceleration of the body 100 is acquired through the acceleration sensor, and a second included angle between a component of the acceleration in a vertical direction and the direction of gravity of the body 100 is calculated. The rotating speed of the fan in the rotating duct 200 is adjusted according to the second included angle, so that a value of the acceleration in the vertical direction is zero. Specifically, when the robot moves on the wall, when an unexpected situation occurs, for example, a voltage or current of a power supply of the rotating duct 200 changes instantaneously and thus the rotating speed of the fan in the rotating duct 200 changes suddenly, resulting in that the robot falls down or flies up, the acceleration sensor may detect that the attitude of the robot is abnormal. By calculating the second included angle between the component of the acceleration obtained by the acceleration sensor in the vertical direction and the direction of gravity, it can be determined whether the robot is in an abnormal motion state or not according to the change of the second included angle. When the robot falls down or flies up, the value of the acceleration measured by the acceleration sensor is not zero, and the value of the acceleration in the vertical direction is controlled to be zero by reversely controlling the rotating speed of the fan in the rotating duct 200. The vertical direction may be understood as a direction in a straight line with the direction of gravity.

It can be understood that the rotating speed of the fan in the rotating duct 200 is adjusted according to the second included angle, so that the value of the acceleration in the vertical direction is zero. When the second included angle is 0 degree, the rotating speed of the fan in the rotating duct 200 is increased, so that the value of the acceleration in the vertical direction is zero. When the second included angle is 180 degrees, the rotating speed of the fan in the rotating duct is decreased, so that the value of the acceleration in the vertical direction is zero. Specifically, when the second included angle is 0 degree, that is, the direction of acceleration is the same as the direction of gravity of the robot, that is, the robot is suddenly falling downwards. In this case, it is necessary to increase the rotating speed of the fan in the rotating duct 200 and increase the magnitude of a thrust of the rotating duct 200. The thrust is used to resist the tendency of the robot to fall rapidly, so that the falling speed of the robot is slowed down gradually, and the value of the acceleration in the vertical direction is gradually reduced to zero. When the second included angle is 180 degrees, that is, the direction of the acceleration is opposite to the direction of the gravity of the robot, that is, since the thrust of the rotating duct 200 is too large, the robot is flying up. In this case, it is necessary to reduce the rotating speed of the fan in the rotating duct 200 and reduce the thrust thereof, so that the robot stops rising, that is, to make the value of the acceleration in the vertical direction to be zero.

It can be understood that, in another embodiment, the wall-climbing robot further includes at least one fixed duct 300 configured to provide a pressure and a second pressure sensor configured to acquire pressure data. The rotating speed of the fan in the rotating duct 200 is adjusted according to the second included angle to acquire pressure data. When the second included angle is 0 degree, the rotating speed of the fan in the fixed duct 300 is increased, so that the value of the acceleration in the vertical direction is zero. When the second included angle is 180 degrees, the rotation of the fan in the fixed duct 300 is stopped. Specifically, at least one fixed duct 300 is arranged on the robot body 100. In the embodiment, there are two fixed ducts 300 which are symmetrically arranged at both ends of the center of gravity of the robot body 100. When the robot is located on the wall, the wind outlet direction of the fixed duct 300 is perpendicular to and away from the wall. The second pressure sensor is arranged at a position where the robot body 100 is connected with the fixed duct 300, and may detect the pressure of the fixed duct 300 on the body 100 in real time. Therefore, in the embodiment, when the second included angle is 0 degree, that is, the robot falls down unexpectedly and quickly, it is necessary to start the emergency mode to increase the rotating speed of the fan in the fixed duct 300. The pressure of the fixed duct 300 on the body 100 is increased, so that the robot is adsorbed on the wall. The friction force between the wall and the robot is increased, and the falling tendency of the robot is slowed down. With assistant of the friction force, falling of the rotating duct 200 is slowed down, so that the value of the acceleration in the vertical direction is gradually changed to be zero, that is, the robot stops falling and is suspended in the air. When the second included angle is 180 degrees, that is, the robot is in a state of flying up, that is, the thrust of the rotating duct 200 is too large, or the robot is moving up, in this case, the robot is not in the emergency mode of safety problems, and there is no need to adjust the friction force through the fixed duct 300 to affect the motion state of the rotating duct 200. Therefore, the rotation of the fan in the fixed duct 300 is stopped, so that the friction force is zero.

It can be understood that, in the embodiment, the thrust data corresponding to a plurality of first pressure sensors is acquired; vector calculation is performed on the plurality of thrust data to acquire the value and direction of the thrust resultant force of the plurality of thrust data. According to the value and direction of the thrust resultant force, the rotating speeds of the fans in a plurality of rotating ducts 200 are adjusted. Since the plurality of rotating ducts 200 are fixed to the robot body 100, the plurality of rotating ducts 200 generate a plurality of thrusts. According to the force analysis, vector calculation is performed on the plurality of thrusts. Specifically, in the embodiment, the rotating ducts 200 are symmetrically arranged on both sides of the center of gravity of the body 100, so that the thrust resultant force is the accumulation of the plurality of thrusts.

It can be understood that, according to the value and direction of the thrust resultant force, the rotating speeds of the fans in the plurality of rotating ducts 200 are adjusted to acquire preset installation moment arms corresponding to the plurality of rotating ducts 200. According to the lever balance, the magnitudes of the thrusts corresponding to the plurality of rotating ducts 200 are calculated by using the installation moment arms. According to the calculated magnitudes of the thrusts corresponding to the plurality of rotating ducts 200, the rotating speeds of the fans are adjusted, so that the thrust data reaches the calculated magnitudes of the thrusts corresponding to the plurality of rotating duct 200. Specifically, since a plurality of rotating ducts 200 are fixedly installed on the robot body 100 to generate a plurality of thrusts, it is necessary to perform vector calculation on the plurality of thrusts. When the thrusts are symmetrically distributed on both sides of the center of gravity of the robot, it is only necessary to make the rotating ducts 200 have the same thrust, and at the same time, to adjust equally the thrust value of each rotating duct 200, so that the thrust resultant force of the rotating ducts 200 is equal to the gravity of the robot. When the rotating ducts 200 are not evenly and symmetrically distributed on both sides of the center of gravity of the robot, according to the principle of lever balance, it is necessary to calculate the thrust distribution ratio of the rotating ducts 200 according to the moment arm ratio of the rotating ducts 200, and then calculate the magnitude of the thrust. Of course, there may be various distribution methods because more than one rotating duct 200 is arranged on both sides of the center of gravity of the robot, and various thrust combinations may be used to achieve the purpose that the thrust resultant force is equal to the gravity of the robot in magnitude and opposite in direction.

It can be understood that the installation moment arms corresponding to the plurality of rotating ducts 200 are arranged symmetrically and equally along the center of gravity of the body 100. Specifically, the plurality of rotating ducts 200 are symmetrically arranged on both sides of the center of gravity of the robot, and the distances between the rotating ducts are equal. This installation method can simplify the calculation of the thrust and reduce the complexity and difficulty of the algorithm control.

It can be understood that the included angle between the component of the attitude direction of the body 100 in the horizontal direction and the horizontal line is calculated, and the rotating speed of the fan in the rotating duct 200 is adjusted according to the included angle in the horizontal direction, so that the plurality of rotating ducts 200 are on the same horizontal line. Specifically, when there is an included angle between the horizontal component of the attitude direction of the body 100 and the horizontal line, that is, the linear load-bearing frame is not in a horizontal state, the rotating ducts 200 installed on the load-bearing frame are not balanced on the horizontal line, resulting in that the attitude of the robot will be inclined. Therefore, it is necessary to adjust the rotating speed of the fan in the corresponding rotating duct 200 according to the included angle, so that the attitude of the robot is restored to be horizontal. That is, the rotating speed of the fan in the rotating duct 200 on the side to which the attitude of the robot is deviated is increased, so that the attitude of the robot is corrected.

It can be understood that the control of the thrust data adopts a proportional-integral-derivative (PID) control algorithm, and specifically, the following control algorithm is adopted:

$$\mathrm{e}(t) = r(t) - c(t)$$

$$\mathrm{u}(t) = k_p \mathrm{e}(t) + k_i \sum_{n=0}^{t} e(n) + k_d (e(t) - e(t-1))$$

wherein:

r(t) is the calculated thrust;
c(t) is the thrust resultant force corresponding to the current rotating ducts 200;
e(t) is the error between the calculated thrust and the current thrust resultant force;
u(t) is the adjusted value of the thrust resultant force calculated according to the calculated thrust and the current thrust resultant force.

Through the PID control algorithm, the rotating speed of the fan in the rotating duct 200 may be adjusted in real time, and the thrust is adjusted in real time according to the real-time change of the robot, so that the robot can be kept stably suspended at any position on the arched wall of the tunnel to ensure the precise measurement requirements of the robot.

It can be understood that the control of the thrust direction of the rotating duct 200 adopts a proportional-derivative (PD) control algorithm. Specifically, the following control algorithm is adopted:

$$e(t) = r(t) - c(t)$$

$$u(t) = k_p e(t) + k_d (e(t) - e(t-1))$$

wherein:

r(t) is the desired attitude;
c(t) is the current attitude;
e(t) is the error between the desired attitude and the current attitude;
u(t) is the attitude adjustment value calculated from the desired attitude and the current attitude.

Through the PD control algorithm, the orientation of the rotating duct 200 may be adjusted in real time, that is, the thrust direction of the rotating duct 200 may be adjusted, and the thrust direction is adjusted in real time according to the real-time change of the attitude of the robot, so that the thrust direction of the rotating duct 200 is always opposite to the direction of gravity of the robot, and the magnitude of thrust is always equal to that of gravity, which enables the robot to be kept suspended at any position on the arched wall of the tunnel to ensure the precise measurement requirements of the robot.

While the preferred embodiments of the present invention have been described in detail, the present invention is not limited to the embodiments described above, and those of ordinary skills in the art may make various modifications and replacements within the scope of the appended claims.

## Claims

1. A thrust control method for a wall-climbing robot, comprising a body, a plurality of rotating ducts configured to provide a thrust, a first pressure sensor configured to acquire thrust data corresponding to the rotating ducts, and an acceleration sensor configured to acquire an acceleration of the body, wherein a load-bearing frame is arranged on the body, the load-bearing frame is of a linear type, the plurality of rotating ducts are fixed on the linear load-bearing frame, the plurality of rotating ducts are symmetrically arranged on both sides of a center of gravity of the robot, and distances between the rotating ducts are equal, and the method comprises:

acquiring an attitude direction of the body, and calculating a first included angle between the attitude direction and a direction of gravity (S100);
adjusting a thrust direction of the rotating ducts according to the first included angle to make the thrust direction of the rotating ducts opposite to the direction of gravity (S200);
acquiring the thrust data corresponding to the rotating ducts, and adjusting rotating speeds of fans in the rotating ducts according to the thrust data to make the thrust data equal to a value of gravity of the body (S300);
acquiring a direction of the acceleration of the body, and calculating a second included angle between the acceleration of the body in a vertical direction and the direction of gravity of the body; and
adjusting rotating speeds of the fans in the rotating ducts according to the second included angle to make a value of the acceleration of the body in the vertical direction be zero;

wherein the adjusting a thrust direction of the rotating ducts according to the first included angle(S200) comprises:

acquiring a rotational angular velocity corresponding to the attitude direction;
acquiring a rotation direction of the body according to the rotational angular velocity; and
rotating the rotating ducts in a direction opposite to the rotation direction of the body according to the first included angle and the rotation direction of the body, wherein the rotating ducts are rotated by the first included angle;

wherein the adjusting rotating speeds of the fans in the rotating ducts according to the second included angle to make a value of the acceleration of the body in the vertical direction be zero comprises:

in a case that the second included angle is 0 degree, increasing the rotating speeds of the fans in the rotating ducts to make the value of the acceleration of the body in the vertical direction be zero; and
in the case that the second included angle is 180 degrees, decreasing the rotating speeds of the fans in the rotating ducts to make the value of the acceleration in the vertical direction be zero;

wherein the wall-climbing robot further comprises at least one fixed duct configured to provide a pressure on a wall and a second pressure sensor configured to acquire pressure data corresponding to the fixed duct, and the method further comprises:

acquiring the pressure data corresponding to the fixed duct; and
in a case that the second included angle is 0 degree, increasing a rotating speed of a fan in the fixed duct to make the value of the acceleration in the vertical direction be zero; and
wherein the method further comprises:

calculating a horizontal included angle between the attitude direction of the body and a horizontal direction; and
adjusting the rotating speeds of the fans in the rotating ducts according to the horizontal included angle to make the plurality of rotating ducts on the same horizontal line.

2. The method according to claim 1, wherein the acquiring the thrust data corresponding to the rotating ducts, and adjusting rotating speeds of fans in the rotating ducts according to the thrust data to make the thrust data equal to a value of gravity of the body (S300) comprises:

acquiring a plurality of the thrust data corresponding to the plurality of first pressure sensors;
performing vector calculation on the plurality of thrust data to obtain a value and a direction of a thrust resultant force of the plurality of thrust data; and
adjusting the rotating speeds of the fans in the plurality of the rotating ducts according to the value and the direction of the thrust resultant force.

3. The method according to claim 2, wherein the adjusting the rotating speeds of the fans in the plurality of the rotating ducts according to the value and the direction of the thrust resultant force comprises:

acquiring preset installation moment arms corresponding to the plurality of rotating ducts;
according to a lever balance, calculating a target thrust corresponding to the plurality of rotating ducts by using the installation moment arms; and
adjusting the rotating speeds of the fans in the rotating ducts according to the target thrust corresponding to the rotating ducts and the thrust data to enable the thrust data to reach the calculated target thrust.

4. The method according to claim 3, wherein a PID control algorithm is adopted to control the thrust data.

5. The method according to claim 4, wherein a PD control algorithm is adopted to control the thrust direction of the rotating ducts.

**Patentansprüche**

1. Schubsteuerungsverfahren für einen Wandkletterroboter, der einen Körper, eine Vielzahl von drehbaren Kanälen, die konfiguriert sind, um einen Schub bereitzustellen, einen ersten Drucksensor, der konfiguriert ist, um Schubdaten entsprechend den drehbaren Kanälen zu erfassen, und einen Beschleunigungssensor, der konfiguriert ist, um eine Beschleunigung des Körpers zu erfassen, umfasst, wobei ein lasttragender Rahmen am Körper angeordnet ist, der lasttragende Rahmen linearer Art ist, die Vielzahl von drehbaren Kanälen auf dem linearen lasttragenden Rahmen befestigt ist, die Vielzahl von drehbaren Kanälen symmetrisch auf beiden Seiten eines Schwerpunkts des Roboters angeordnet ist und Abstände zwischen den drehbaren Kanälen gleich sind, und das Verfahren umfasst:

Erfassen einer Haltungsrichtung des Körpers und Berechnen eines ersten eingeschlossenen Winkels zwischen der Haltungsrichtung und einer Schwerkraftrichtung (S100);

Anpassen einer Schubrichtung der drehbaren Kanäle gemäß dem ersten eingeschlossenen Winkel, um die Schubrichtung der drehbaren Kanäle der Schwerkraftrichtung entgegenzusetzen (S200);

Erfassen der Schubdaten entsprechend den drehbaren Kanälen, und Anpassen von Drehgeschwindigkeiten von Lüftern in den drehbaren Kanälen gemäß den Schubdaten, um die Schubdaten einem Schwerkraftwert des Körpers gleichzusetzen (S300);

Erfassen einer Richtung der Beschleunigung des Körpers und Berechnen eines zweiten eingeschlossenen Winkels zwischen der Beschleunigung des Körpers in einer vertikalen Richtung und der Schwerkraftrichtung des Körpers; und

Anpassen der Drehgeschwindigkeiten der Lüfter in den drehbaren Kanälen gemäß dem zweiten eingeschlossenen Winkel, um einen Wert der Beschleunigung des Körpers in der vertikalen Richtung auf null zu setzen;

wobei das Anpassen einer Schubrichtung der drehbaren Kanäle gemäß dem ersten eingeschlossenen Winkel (S200) umfasst:

Erfassen einer Drehwinkelgeschwindigkeit, die der Haltungsrichtung entspricht;

Erfassen einer Drehrichtung des Körpers gemäß der Drehwinkelgeschwindigkeit; und

Drehen der drehbaren Kanäle in eine der Drehrichtung des Körpers entgegengesetzte Richtung gemäß dem ersten eingeschlossenen Winkel und der Drehrichtung des Körpers, wobei die drehbaren Kanäle um den ersten eingeschlossenen Winkel gedreht werden;

wobei das Anpassen der Drehgeschwindigkeiten der Lüfter in den drehbaren Kanälen gemäß dem zweiten eingeschlossenen Winkel, um einen Wert der Beschleunigung des Körpers in der vertikalen Richtung auf null zu setzen umfasst:

in einem Fall, dass der zweite eingeschlossene Winkel 0 Grad beträgt, Erhöhen der Drehgeschwindigkeiten der Lüfter in den drehbaren Kanälen, um den Wert der Beschleunigung des Körpers in der vertikalen Richtung auf null zu setzen; und

in einem Fall, dass der zweite eingeschlossene Winkel 180 Grad beträgt, Verringern der Drehgeschwindigkeiten der Lüfter in den drehbaren Kanälen, um den Wert der Beschleunigung in der vertikalen Richtung auf null zu setzen;

wobei der Wandkletterroboter weiter mindestens einen feststehenden Kanal, der konfiguriert ist, um einen Druck auf eine Wand bereitzustellen, und einen zweiten Drucksensor, der konfiguriert ist, um Druckdaten zu erfassen, die dem feststehenden Kanal entsprechen, umfasst, und das Verfahren weiter umfasst:

Erfassen der Druckdaten, die dem feststehenden Kanal entsprechen; und

in einem Fall, dass der zweite eingeschlossene Winkel 0 Grad beträgt, Erhöhen einer Drehgeschwindigkeit eines Lüfters im feststehenden Kanal, um den Wert der Beschleunigung in der vertikalen Richtung auf null zu setzen; und

wobei das Verfahren weiter umfasst:

Berechnen eines horizontalen eingeschlossenen Winkels zwischen der Haltungsrichtung des Körpers und einer horizontalen Richtung; und

Anpassen der Drehgeschwindigkeiten der Lüfter in den drehbaren Kanälen gemäß dem horizontalen eingeschlossenen Winkel, um dafür zu sorgen, dass die Vielzahl von drehbaren Kanälen auf derselben horizontalen Linie liegt.

2. Verfahren nach Anspruch 1, wobei das Erfassen der Schubdaten, die den drehbaren Kanälen entsprechen, und Anpassen von Drehgeschwindigkeiten von Lüftern in den drehbaren Kanälen gemäß den Schubdaten, um die Schubdaten einem Schwerkraftwert des Körpers gleichzusetzen (S300), umfasst:

Erfassen einer Vielzahl von Schubdaten, die der Vielzahl von ersten Drucksensoren entsprechen;
Durchführen einer Vektorberechnung an der Vielzahl von Schubdaten, um einen Wert und eine Richtung eines sich aus der Vielzahl von Schubdaten ergebenden Schubs zu erhalten; und
Anpassen der Drehgeschwindigkeiten der Lüfter in der Vielzahl von den drehbaren Kanälen gemäß dem Wert und der Richtung der resultierenden Schubkraft.

3. Verfahren nach Anspruch 2, wobei das Anpassen der Drehgeschwindigkeiten der Lüfter in der Vielzahl von den drehbaren Kanälen gemäß dem Wert und der Richtung der resultierenden Schubkraft umfasst:

Erfassen voreingestellter Installationsmomentarme, die der Vielzahl von drehbaren Kanälen entsprechen;
gemäß einem Hebelausgleich, Berechnen eines Zielschubs entsprechend der Vielzahl von drehbaren Kanälen unter Verwendung der Installationsmomentarme; und
Anpassen der Drehgeschwindigkeiten der Lüfter in den drehbaren Kanälen gemäß dem Zielschub entsprechend den drehbaren Kanälen, und den Schubdaten, um zu ermöglichen, dass die Schubdaten den berechneten Zielschub erreichen.

4. Verfahren nach Anspruch 3, wobei ein PID-Steueralgorithmus eingesetzt wird, um die Schubdaten zu steuern.

5. Verfahren nach Anspruch 4, wobei ein PD-Steueralgorithmus eingesetzt wird, um die Schubrichtung der drehbaren Kanäle zu steuern.

**Revendications**

1. Procédé de commande de poussée pour un robot grimpeur de murs, comprenant un corps, une pluralité de conduits rotatifs configurés pour fournir une poussée, un premier capteur de pression configuré pour acquérir des données de poussée correspondant aux conduits rotatifs, et un capteur d'accélération configuré pour acquérir une accélération du corps, dans lequel un cadre porteur de charge est agencé sur le corps, le cadre porteur de charge est de type linéaire, la pluralité de conduits rotatifs sont fixés sur le cadre porteur de charge linéaire, la pluralité de conduits rotatifs sont agencés symétriquement des deux côtés d'un centre de gravité du robot, et les distances entre les conduits rotatifs sont égales, et le procédé comprend :

l'acquisition d'une direction d'attitude du corps, et le calcul d'un premier angle inclus entre la direction d'attitude et une direction de gravité (S100) ;
l'ajustement d'une direction de poussée des conduits rotatifs en fonction du premier angle inclus pour rendre la direction de poussée des conduits rotatifs opposée à la direction de gravité (S200) ;
l'acquisition des données de poussée correspondant aux conduits rotatifs, et l'ajustement de vitesses de rotation de ventilateurs dans les conduits rotatifs en fonction des données de poussée pour rendre les données de poussée égales à une valeur de gravité du corps (S300) ;
l'acquisition d'une direction de l'accélération du corps et le calcul d'un second angle inclus entre l'accélération du corps dans une direction verticale et la direction de gravité du corps ; et
l'ajustement de vitesses de rotation des ventilateurs dans les conduits rotatifs en fonction du second angle inclus pour qu'une valeur de l'accélération du corps dans la direction verticale soit nulle ;
dans lequel l'ajustement d'une direction de poussée des conduits rotatifs en fonction du premier angle inclus (S200) comprend :

l'acquisition d'une vitesse angulaire de rotation correspondant à la direction d'attitude ;
l'acquisition d'une direction de rotation du corps en fonction de la vitesse angulaire de rotation ; et
la rotation des conduits rotatifs dans une direction opposée à la direction de rotation du corps en fonction du premier angle inclus et la direction de rotation du corps, dans lequel les conduits rotatifs sont tournés selon le premier angle inclus ;

dans lequel l'ajustement de vitesses de rotation des ventilateurs dans les conduits rotatifs en fonction du second angle inclus pour qu'une valeur de l'accélération du corps dans la direction verticale soit nulle comprend :

dans le cas où le second angle inclus est de 0 degré, l'augmentation des vitesses de rotation des ventilateurs dans les conduits rotatifs pour que la valeur de l'accélération du corps dans la direction verticale soit nulle ; et
dans le cas où le second angle inclus est de 180 degrés, la diminution des vitesses de rotation des

**10**

ventilateurs dans les conduits rotatifs pour que la valeur de l'accélération dans la direction verticale soit nulle ;

dans lequel le robot grimpeur de murs comprend en outre au moins un conduit fixe configuré pour fournir une pression sur un mur et un second capteur de pression configuré pour acquérir des données de pression correspondant au conduit fixe, et le procédé comprend en outre :

l'acquisition des données de pression correspondant au conduit fixe ; et
dans le cas où le second angle inclus est de 0 degré, l'augmentation d'une vitesse de rotation d'un ventilateur dans le conduit fixe pour que la valeur de l'accélération dans la direction verticale soit nulle ; et
dans lequel le procédé comprend en outre :

le calcul d'un angle horizontal inclus entre la direction d'attitude du corps et une direction horizontale ; et
l'ajustement des vitesses de rotation des ventilateurs dans les conduits rotatifs en fonction de l'angle horizontal inclus pour faire en sorte que la pluralité de conduits rotatifs se trouve sur la même ligne horizontale.

2. Procédé selon la revendication 1, dans lequel l'acquisition des données de poussée correspondant aux conduits rotatifs et l'ajustement de vitesses de rotation des ventilateurs dans les conduits rotatifs en fonction des données de poussée pour rendre les données de poussée égales à une valeur de gravité du corps (S300) comprend :

l'acquisition d'une pluralité de données de poussée correspondant à la pluralité de premiers capteurs de pression ;
la réalisation d'un calcul vectoriel sur la pluralité de données de poussée pour obtenir une valeur et une direction d'une force résultante de poussée de la pluralité de données de poussée ; et
l'ajustement des vitesses de rotation des ventilateurs dans la pluralité de conduits rotatifs en fonction de la valeur et de la direction de la force résultante de poussée.

3. Procédé selon la revendication 2, dans lequel l'ajustement des vitesses de rotation des ventilateurs dans la pluralité de conduits rotatifs en fonction de la valeur et de la direction de la force résultante de poussée comprend :

l'acquisition de bras de moment d'installation prédéfinis correspondant à la pluralité de conduits rotatifs ;
selon un équilibre à levier, le calcul d'une poussée cible correspondant à la pluralité de conduits rotatifs en utilisant les bras de moment d'installation ; et
l'ajustement des vitesses de rotation des ventilateurs dans les conduits rotatifs en fonction de la poussée cible correspondant aux conduits rotatifs et des données de poussée pour permettre aux données de poussée d'atteindre la poussée cible calculée.

4. Procédé selon la revendication 3, dans lequel un algorithme de commande PID est adopté pour commander les données de poussée.

5. Procédé selon la revendication 4, dans lequel un algorithme de commande PD est adopté pour commander la direction de poussée des conduits rotatifs.

acquire an attitude direction of the body, and calculate a first included angle between the attitude direction and a direction of gravity ⟩ S100

adjust a thrust direction of the rotating ducts according to the first included angle to make the thrust direction of the rotating ducts opposite to the direction of gravity ⟩ S200

acquire the thrust data corresponding to the rotating ducts, and adjusting rotating speeds of fans in the rotating ducts according to the thrust data to make the thrust data equal to a value of gravity of the body ⟩ S300

FIG. 1

200

100

300

FIG. 2

**EP 4 339 728 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 114801615 A